# EUROPEAN PATENT SPECIFICATION

(11) **EP 2 156 379 B1**
(45) Date of publication and mention of the grant of the patent: **16.03.2016**
(21) Application number: 08741621.0
(22) Date of filing: 11.04.2008
(51) Int. Cl.: G06Q 10/08

(54) **SYSTEM AND METHOD FOR OBTAINING OBJECT DATA**
SYSTEM UND VERFAHREN ZUM ERHALTEN VON OBJEKTDATEN
SYSTÈME ET PROCÉDÉ POUR OBTENIR DES DONNÉES D'OBJET

(30) Priority: 11.04.2007 NL 1033666
(43) Date of publication of application: 24.02.2010
(73) Proprietor: Ideatics B.V., 1017 CH Amsterdam (NL)
(72) Inventor: VAN INGEN, Jeroen, NL-1861 ED Bergen (NL); FIJEN, Goswin, NL-1077 ZB Amsterdam (NL)
(74) Representative: Nederlandsch Octrooibureau
(86) International application number: PCT/NL2008/050200
(87) International publication number: WO 2008/127096

(56) References cited:
- WO-A-01/86501
- WO-A-02/084615
- WO-A-03/052585
- WO-A-2005/069676
- WO-A-2007/001237
- WO-A1-02/37082
- US-A- 5 933 829
- US-A1- 2006 094 411
- US-B1- 6 510 997
- TITTEL E ET AL: "HTML for Dummies -- Chapter: Common Gateway Interface (CGI)", INTERNET CITATION, May 2002 (2002-05), XP002339561, Retrieved from the Internet: URL:http://www.lanwrights.com/books/html/4 dum/h4d3e/extras/ch18sec1.htm [retrieved on 2005-08-05]

## Description

The present invention relates to a method and a system for obtaining object data which is representative of an object.

Systems are known in which an object, such as a (semi)product, a (reusable) packaging, blister, banknote, a person or animal, and the like, is identified by providing the respective object with an identification carrier which can be consulted for the purposes of identification. The identification carrier can in this case in principle be secured to or incorporated into the object, for example an anti-theft chip which is fastened to an item of clothing in a shop, although this is not necessary. It is for example also possible to "virtually" couple an identification carrier to the object. An identification carrier can for example be virtually coupled to a person by providing the person with the identification carrier, for example an identity card, loyalty card or credit card.

An identification carrier is provided with identification data allowing the identity of the object to be determined. If the identification carrier is for example configured as a radio frequency identification (RFID) transponder, also known as an RFID chip or tag, electronic data, which is representative of the identity of the object, can be saved in the transponder. Many types of transponders are known, including passive transponders which obtain their energy from the electromagnetic fields of the reader and active transponders which have an internal energy source.

As stated hereinbefore, a radio frequency identification (RFID) transponder of this type can be read out wirelessly with the aid of a reader, also known as a scanner, and the stored information if relevant is displayed on the screen of the scanner or peripherals pertaining thereto. In addition to the above-mentioned data about the identity of the transponder, further information can in some cases be read out. The amount of data which can be stored on transponders of this type is however fairly small in view of the limited storage capacity of the transponders. Further information about the respective object, such as the name and the address of the owner and/or manufacture of the object, administrative data about the object, such as the date of manufacture, date of sale, date of delivery to various intermediaries, and multimedia information (such as images, videos, sound, animations concerning the object), is however, given the limited data storage capacity of transponders of this type, not possible or at least possible to an insufficient degree or merely in heavily decoded and compressed form. Furthermore, specific information, such as information in the form of the above-mentioned administrative data, is difficult to manage on a transponder of this type in view of the difficulties which are experienced during the securing of the information and during the authorization of the persons or equipment seeking to obtain access to the information. In practice this means that, apart from the identification data, no or almost no object data is stored in the information carriers.

Data on the transponder of an object also has to be adapted or altered during the service life of that object; in the case of the known transponders this is problematic, since the programming of the transponder with altered object data requires a programming unit.

Some of the known systems operate in a closed domain, such as an individual or "private" domain; this means that the information carriers and readers used are adjusted to one another, for example as far as the read-out protocol, storage protocol, coding/meaning of the various items of data, the communication network for mutual communication and the like are concerned, and are generally not available to third parties. In the public domain, in which a specific public read-out unit, for example a scanner, is given various types of identification carriers to scan, which may use various read-out/storage protocols and the data format of which may vary, the reader does not know whether (or at least where) object data is stored on the data carriers, how the object data may be accessed, what meaning can be ascribed to the object data which may be read out, and whether the read-out data of a carrier can be exchanged with the data read out of a different carrier. In addition, it is not known in advance which reader will execute the read-out action. The same applies to applications in which information is exchanged between two or more closed domains. In such a situation, the reader and the identification carriers are not adjusted or at least are insufficiently adjusted to one another. In order nevertheless to be able to read out the various identification carriers, a highly complex and thus expensive reader is required. This is one of the reasons why systems of this type have not been used on a large scale in the public domain. In addition, the fact that the object data is stored on the information carrier itself means that potentially sensitive data can be retrieved relatively easily by unauthorized parties; this is undesirable in many cases. A further drawback is that the original issuer of the identification carrier and of the data stored therein often no longer has access to the identification carrier as soon as said information carrier is in the public domain in order to manage the data on the identification carrier.

In order to overcome this problem, it is conceivable to collect in one single central database object data of all the various types of identification carriers, the location of the object data being constant. However, this greatly restricts the usability and flexibility of the system. In addition, the parties who utilize the object data, such as in the case of a commercial product the various commercial parties in a sales channel, are generally not prepared to allow potentially sensitive object data to be accessed on a single, fixedly enterable database, since there is a risk of the various parties being able to read one another's data.

A further drawback is that the known systems allow merely communication of data between a reading unit and one or more central servers.

WO 03/052585 discloses a method and system wherein an internet address or intranet address stored in the memory of a transponder, and the transponder ID, are read out by said transponder and the internet page or intranet page identified by the internet address is addressed. An access control is carried out after communication has been successfully established with the corresponding internet page or intranet page, and only in the event of a successful access control using the transponder ID, is access provided to the actual product information associated with the respective product which is, in turn, associated with the transponder.

TITTEL E ET AL: "HTML for Dummies - Chapter: Common Gateway Interface (CGI)", INTERNET CITATION, May 2002 (2002-05), XP002339561, Retrieved from the Internet: RL:http://www.lanwrights.com/books/html/4dum/h4d3e/ extras/ch18sec1 .htm [retrieved on 2005-08-05] relates to gateway scripts or programs. The programs add the capability for interaction between browsers and servers across the Web. Gateway scripts provide the capacity to accept and process forms data and can deliver intelligence necessary to customize Web pages based on user input.

It is an object of the present invention to provide an improved method and an improved system for obtaining object data, in which at least some of the above-mentioned and/or other drawbacks of the prior art are overcome.

It is also the object of the present invention to provide a system and method in which the management of the object data and the management of the identification data and thus of the information carrier can be separated.

It is also an object of the invention to provide a system and method in which at least some of the object data can be provided to third parties.

At least one of these objects is achieved by a method according to claim 1 and a system according to claim 17.

In fact, all general references in the present document to the dispatching of data or the provision of data over an (electronic) network may be assumed to refer to the same network as that over which the identification data is dispatched, although it may also be a different electronic network. Examples of networks include a fixed telephone network, a network for mobile telephony, the Internet, or combinations thereof.

Since each identification carrier is related in advance to an identification code and this code is saved separately on one or more server units, it is possible to provide object data in the use phase only when the identification carrier can be identified as one of the identification carriers programmed in the preliminary phase.

Since the identification carrier contains location data of one or more server units which can be accessed via a network, a reading unit, such as an RFID scanner, can automatically establish contact with the correct server units, without the reader having to he instructed to do so in advance. After all, the correct server unit can be approached as a function of the location data stored on the information carrier. The identification data also comprises command data, preferably in the form of a computer program, for executing commands on one or more of the network locations. The method can then also include the determining by the server unit of command data from the identification data, and the executing by the server unit on the basis of the command data of the command pertaining thereto in order to generate new object data which is representative of the identified object and/or to adapt existing object data.

By storing command data in the information carrier, dispatching the same data to the server unit and by executing a specific command on the basis of the command data received by the server unit in order to generate and/or process object data, the reading unit and/or the server unit themselves do not have to be adjusted for this purpose (for example programmed).

In specific embodiments, the provision includes the sending of object data to at least one further server over a network. The further server unit can be formed by the server of a third party, for example an emergency service or a similar organization, with which the object (in this case for example a person) wishes to establish contact. The third party is given access to the object data pertaining to the object, for example medical data about the person if the third party is a medical emergency service. In a further embodiment, the reading unit is then connected to a first mobile or fixed telephone unit and the further server unit is connected to a second mobile or fixed telephone unit and a screen. In this case, during the provision of object data, a communication connection between the first and second telephone units can be established and object data can be displayed on the screen.

According to a further embodiment, the command data comprises a computer program which executes the aforementioned command when the computer program is run on the server unit. The computer program is preferably of the directly executable type, i.e. the program is an executable, thus allowing the command to be executed directly on the server without compilation of the program. The computer program may be an HTTP request which can be processed directly by the called server. It is however equally possible to allow the program first to compile on the server means, after which it can be run by the server means.

In other embodiments, the command data comprises a reference to a computer program stored on the server means, wherein the program executes the aforementioned command when the program is run on the server. This embodiment has the advantage of requiring merely a relatively small amount of command data, i.e. in practice just a single reference to a location on the storage unit or in the memory holds the server unit, in order to allow execution of the necessary operations on the server unit. This embodiment of the invention can be advantageous, in particular, in situations in which a large amount of object data must be processed or generated or in which complex operations must be performed.

The generating of object data can, for example, include the generating of date and location data of the read-out process of the identification carrier that is stored on the server unit together with the identification data. Based on this location and date data, the process of transporting a specific object can, for example, be checked periodically over the course of time. Instead of the generating of new object data, object data which is already stored on the server unit can be processed, for example by sending this object data, possibly after an alteration, to the reader. During the reading-out of the identification carrier, the reader is thus provided not only with the identification data, but also with (some) of the object data.
Examples of this include a photo of the object pertaining to the read-out identification carrier. Another form of processing object data consists of storing on the storage unit of the server the object data which is dispatched by the reading unit to the server unit.

According to a further embodiment, the location data comprises a domain name, in particular, in the case of the use of the Internet as a communication network, a Unique Resource Location (URL), so the location to which the read-out data must be dispatched is established in a uniform manner.
According to a further preferred embodiment, the identification data comprises at least one variable which is stored in advance on the identification carrier. The use of a variable in the programmable part of the chip can result in a shorter identification which may be more readily recognizable to the human eye. The variable may, for example, be a freely entered character string or a serial number which is fixedly programmed in the 30 transponder.
According to specific embodiments, the first identification code is a unique code which is secured to the identification carrier, in particular a Unique Identification (UID) code or serial number which is stored permanently in the information carrier. The UID code is a relatively long string of characters which is permanently programmed by the manufacturer of the transponder or at least of the chip on the transponder in the memory of the chip, for example in accordance with ISO standards for the respective chip type.
Although the freely programmable part of the memory of the chip is preferably locked, the content of this part of the memory may in some cases nevertheless be copyable. The uniqueness of each separate chip and thus of each separate transponder may then be determined more effectively and ensured by the UID which is hard-coded ex works.

According to a further preferred embodiment, the identification data comprises user-specific data and the server means execute an authentication on the basis of the user specific data for releasing or not releasing specific commands. User-specific data (such as the business domain, user name, password) can then also be dispatched by the reading unit to the server means, as a result of which specific transactions are released, such as the entry of a sale date.

According to the invention as claimed, not all items of object data are provided to any desired reading unit, but rather the dispatching to the server unit of at least the first identification code also includes the dispatching of at least one reading unit identification code which is representative of the reading unit as a component of the identification data and the determining by the server unit from the reader unit identification code of which part of the stored object data may be provided. The reading unit identification code may be in a simple form, for example a password or similar code, wherein the password determines which part of the object data is available to the respective reading unit. Similarly, in addition a user code which is representative of the user of an object is dispatched as a component of the identification data and the server unit can determine from the user-specific user code which part of the stored object data may be provided. Depending on the identity of the person who read the identification carrier, more or less sensitive information about the object can, for example, be released. In a specific preferred mode of the invention, the object data is distributed over two or more server units which are interconnected via a network. It may thus, for example, easily be ensured that various users merely have access to the object data stored on their own server.

Further advantages, features and details of the present invention will be explained based on the subsequent description of a few embodiments thereof. The description will refer to the appended figures, in which:
Figure 1 is a schematic overview of a system for the identifying of an object according to a first embodiment of the invention;
Figure 2 is a flow chart of the method steps which the reading unit carries out during the identifying of an object;
Figure 3 is a flow chart of the method steps which the server carries out during the identifying of an object;
Figures 4a-4c are flow charts of various examples of commands executed by the server;
Figure 5 is a flow chart of steps which the reading unit carries out after the identification;
Figure 6 is a flow chart showing a further embodiment of the invention;
Figure 7 is a schematic overview of another example of a system according to the invention; and
Figure 8 is a schematic overview of a further example of a system according to the invention.

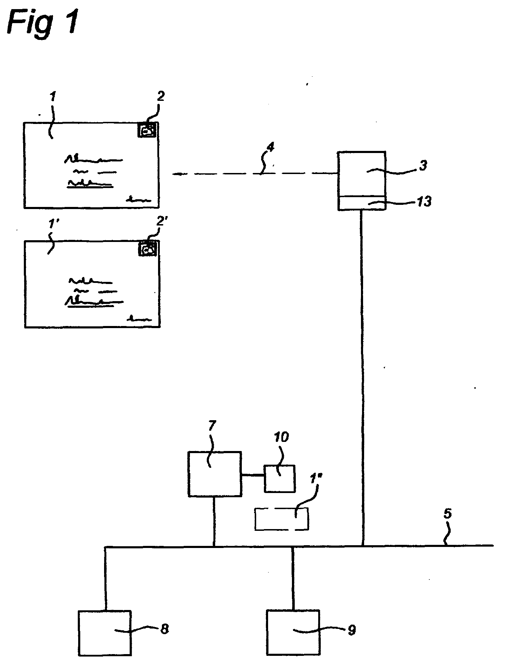

Figure 1 shows an object 1, for example a document such as a passport, credit card, loyalty card, (insurance) policy, or, as in the present case, a business card 1. The document is provided with an electronic identification carrier 2, for example in the form of a passive or active radio frequency information (RFID) transponder. Active RFID tags are powered by their own energy source, for example a battery. The tags can be written on and/or data can be read out with the aid of a reading unit or read/write unit respectively. Data is transmitted by means of radio waves. Passive RFID tags operate in a similar manner, but are not provided with their own energy source and send a response by means of the conversion of the energy of received radio waves. It is conventional to store in the memory of the transponder a unique random identification number, as will be discussed hereinafter.

The RFID transponder 2 attached to or in the document can be read out by an electromagnetic read-out device 3 (the term including in the present case, for simplicity of description, equipment with which data can be written to the transponder) via a wireless connection 4. The read-out device 3 is connected to a network 5, such as the Internet, directly or via a computer 13. One or more servers 7,8,9 are coupled to the network 5. The term "servers" refers in the present case to all conceivable forms of computers which are suitable for the storing and processing of data and the communicating of data over electronic networks, such as mainframes, network computers, PCs, laptops and the like.

An RFID transponder contains a memory in which a number of items of data are permanently stored, such as the Unique Identification (UID) number or serial number of the transponder, whereas other data can freely be programmed in the memory. In the preliminary phase, more specifically during the programming process of the identification carrier which is carried out in advance, what is known as identification data is stored in the programmable, user-definable blocks of the memory of the identification carrier, i.e. the available memory space which has been declared free by the respective transponder standard.

In the preliminary phase, the steps described hereinafter can be carried out. First of all, the user specifies how many identification carriers must be issued and selects the standard (for example an ISO communication standard) which must be used for the reading-out and programming of the identification carrier. The server 7 of the user can subsequently carry out the following steps to create the identification data and to program it in the identification carrier:
- generate identification data consisting at least of the known domain name of the server 7, an execution command and optionally an alphanumeric variable, for example 123456;
- activate the programming unit 10 which has been disclosed to the user server 7 in accordance with the selected communication standard and program the generated identification data in the transponder (chip) of the respective RFID transponder 1" in accordance with the settings of the server 7;
- read out via the programming unit 10 the unique identification code of the transponder, for example the serial number thereof, and store the identification code or a second identification code related thereto as a component of the identification data in the server, together with the aforementioned remaining part of the identification data (domain name, execution command, etc.) and any logged data such as the time, location and date of the programming and/or the identity of the user;
- store on the server 7 for each stored identification code (object code) (a reference to the) data which is representative of the associated object (business card). In many cases this will be basic information, such as in the example of the businessg card the NA W data of the owner of the business card. Preferably, a record is created in the server database and the object data and/or the reference thereto is stored therein. This record will serve as the root and the server 7 containing this basic information of an object will be referred to hereinafter as the root server for that object;
- instruct the programming unit 10 to protect the transponder of the business card 10" from write transactions by locking the transponder in a known manner;
- repeat the above-mentioned steps for each transponder to be issued.

Subsequently, the transponders may or may not be virtually coupled to the associated objects. Now that both the object data, such as for example a general definition of the object or the NAW data of the owner of the business card, the identification code on the server and the second identification code stored on the transponder are known to the system, a unique, one-on-one relationship is established between each of the objects, on the one hand, and the object data which is relevant to each of the objects, on the other hand, whereas the object data is stored separately from the identification carriers.

An example of identification data consisting of at least an identification code and location data may be www.lofox.net/x.pl(?)id=123456. The first part of this identification data, i.e. www.lofox.net, is a domain description allowing the location of the server unit 7 to be found on the network 5. The second part, i.e. "x.pl", relates to a command to the server 7 that can be executed by the server. Finally, the identification code contains a variable, i.e. "id=123456". The function of the variable will be explained hereinafter. As stated hereinbefore, during the programming phase of the identification carrier the identification code stored in the identification carrier, or at least a code related thereto, is also stored on the server unit 7 (or one of the remaining server units 8,9), together with any manufacturing data of the transponder and additional data such as the type of transponder, for example the manufacturer's name and indications of type, and placed in the database of the respective server. The identification carriers and one or more of the server units are thus coupled in advance.

The complete string of identification data is in a specific preferred embodiment available in readable form, i.e. for example in accordance with the ASCII standard, so even if there is no network connection, a visual identification, which can subsequently be forwarded in analog/verbal form to a point where there is access to the communication network, can nevertheless easily be carried out locally.

As stated hereinbefore, the database can also comprise, in addition to the identification data, object data which is representative of the object or references to object data of this type, for example data concerning the location of the transponder in the object, a photo of the object, the manufacturing data of the object. In the example of a car, the serial number (VIN, Vehicle Identification Number) of the car, the date of manufacture and the date on which the car leaves the factory can, for example, be stored.

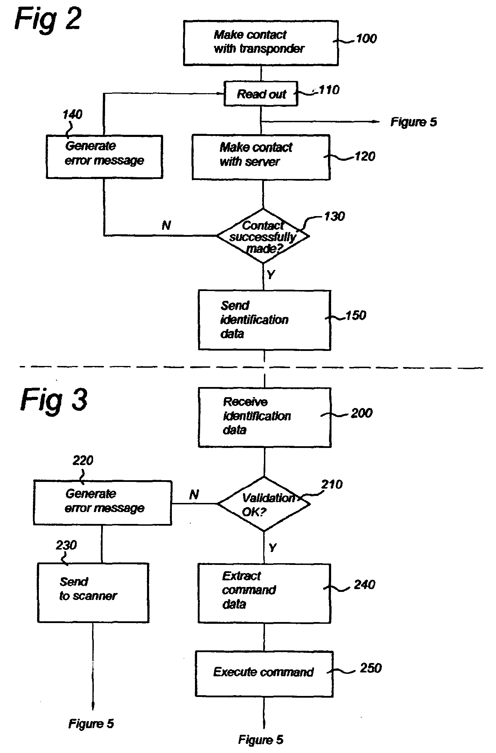

At a later stage, for example when the car is transported to the customer by ship, the object data pertaining to the respective object can be consulted with the aid of a reader 3. For this purpose, the reader 3 establishes contact (step 100, Figure 2) with the transponder 2 and reads out (step 110) at least some of the aforementioned identification data.

On the basis of the read-out location data, the reader, or a peripheral connected thereto, can establish contact (step 120) with the correct server. Server 7 has, for example, the URL www.lofox.net and in the example an attempt is therefore made to establish contact with the first server 7. A check is carried out (step 130) to determine whether the attempt to establish contact with the server has been successful. If the attempt fails, an error message (step 140) is generated. The reading unit then returns to the step of the reading-out (step 110) of a (the same or another) transponder. If contact can be established with the server 7, the reader 3 sends (step 150) the read-out identification data to the server 7. The server 7 receives (step 200, Figure 3) the data and first of all executes a validation (step 210). The validation is carried out, for example, based on the aforementioned variable (which during the programming phase is programmed in the transponder and in addition is stored on the server 7) in combination with the unique identification (UID) number or serial number which is stored permanently in the transponder (and also stored on the server 7). It can thus be checked whether the scanned transponder is known to the system. If the transponder is unknown, the server generates an error message (step 220) which it dispatches to the reader 3 (step 230). If the transponder is known to the server 7, the server unit 7 extracts (step 240) the command data from the received identification data.

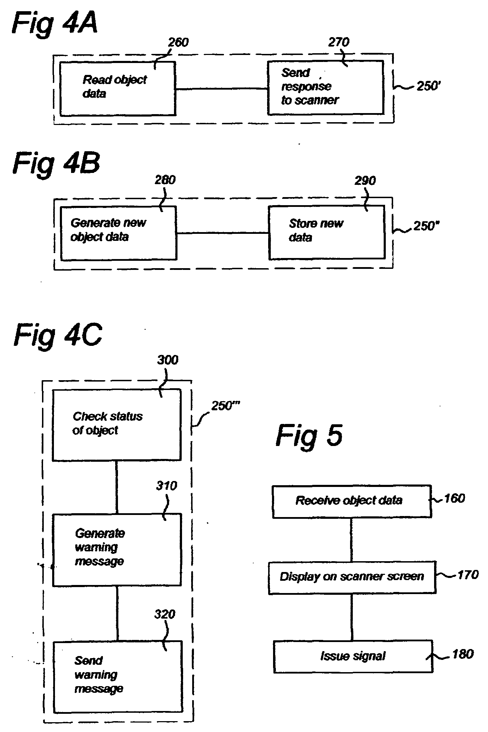

In the present example, the read-out command data is an executable, namely an HTML program named "x.pl". The identification data comprises in this case a URL containing an executable (x.pl). The overall structure forms an http request. The response thereto uses hypertext markup language (HTML). The HTML program is run on the server (step 250), the command contained therein is executed on the server. A command may, for example, be the reading of object data stored previously on the server (step 260, Figure 4a), the sending of a response (step 270), for example comprising the specific object data, to the reader 3, the generating of new object data (step 280, Figure 4b), for example the time and date of the current scan, data concerning the read-out device 3, for example the name, type, time of reading-out, location of reading-out, the storing of generated object data on the respective server unit (step 290). There are however numerous other commands which can be executed by the server. Thus, it is for example possible to check whether the identified object is, for example, known to be stolen (step 300, Figure 4c). If the database contains, for example, an indication that the object is stolen, the program can generate a warning report (step 310) and dispatch the report to a specific location, for example the reader 3 or to the server 8 of the original owner of the object, to the police or the like (320). The warning report is preferably combined with data about the geographical position at which the user is located, for example on the basis of the IP data of the reading unit and/or on the basis of the position data such as can be generated by triangulation by a telephone company (in particular a telecom provider) for a specific mobile access point to the communication network.

The object data dispatched by the server 7 and any additional data, such as a warning message, reach the reader 3 at a given moment (step 160, Figure 5). This data can be displayed on a display screen 10 of the reader 3 (step 170). It is also possible to provide the reader 3 with a loudspeaker 11 with which a warning signal can be issued (step 180), for example if the object is found to be stolen.

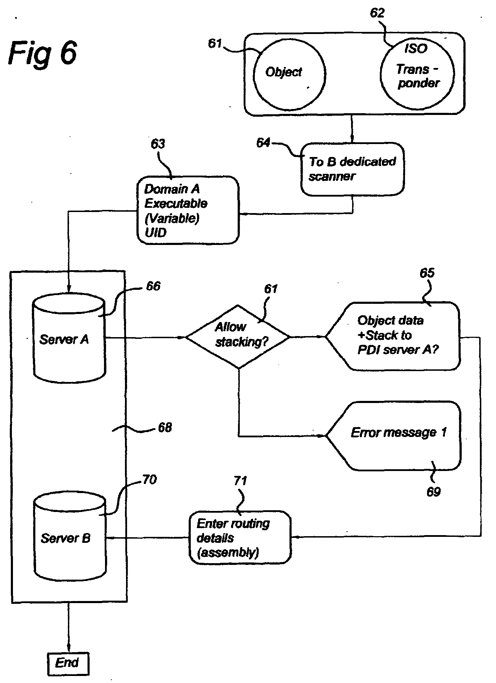

If there are two or more server units, i.e. a root server 7 and a number of remaining server units 8,9, object data can be stacked. Figure 6 illustrates, for example, the situation in which a second server (B), i.e. the server of a specific user, has been allocated a scanner 64 which reads in a transponder 62. The following transaction is allocated to this scanner:
- check that the read-out identification code exists first within the user's own server (A) and, if it does not, in the root server (B);
- retrieve the standard object data and any data released by the root server (B) to this second server (A) and show this data on the reading unit of the user;
- leave after confirmation a reference in the root server (B) to the user's second server (A), including a reference to the object data stored on the second server (A), for example a record number of the data exchange table of the object within the second server (A);
- use the object code to establish a relationship to the user's own object table and execute if appropriate the transaction(s) coupled to this scanner,
- add a record to the database of the user's own server (A) comprising all of the identification data, including any information which may have been added, and set the log data such as the date, time, location, scanner, user and the like.

In Figure 6, a scanner 64 which is coupled to server B reads out a transponder 62 of the object 61, the root data of which is set by the manufacturer in server A. In this server it is specified whether, and if so to whom, stacking rights are assigned 67, i.e. that data may be added to the user's own server, and a routing link 65,71 may be established. If this is not possible, then server A issues an error message 79. If it is possible, then a routing link 71 is established between servers A and B.

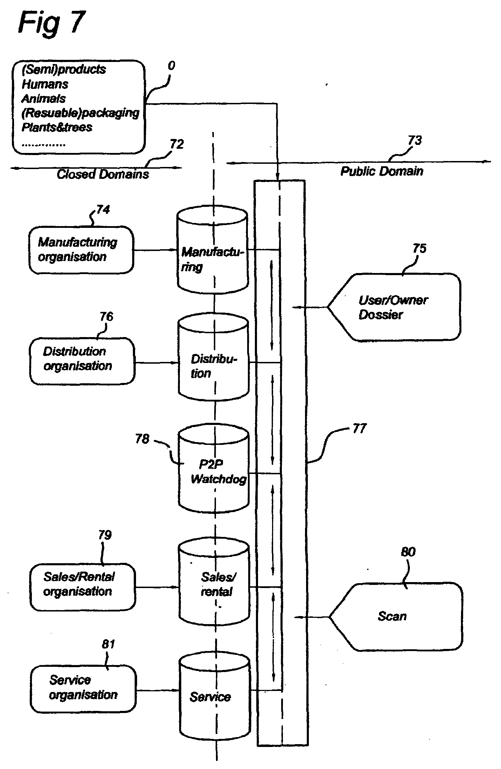

Figure 7 is a schematic overview of an example of a chain of server units which are embodied in accordance with the invention. Shown on the left-hand side are functions in the closed domain 72, whereas functions in the public domain 73 are shown on the righthand side. The system is suitable for objects (0) which are able to move freely or must be identifiable for other reasons. Various organizations having closed domains 74,76,79,81 can incorporate objects coded in accordance with the invention in order subsequently to exchange data with one or more parties further on in the chain. Although various organizations, each with their own server, are shown in the present case, various functions can also be set within a single server.

What is known as a watchdog 78 monitors the system, checks the allocation of new servers, domains, codes, data routing, user routing and the like, for example via the secured and coded public network such as the Internet, between the various servers. In the public domain, a user/owner can manage 75 his own data via a browser, and a scanner can automatically or manually query object data 80.

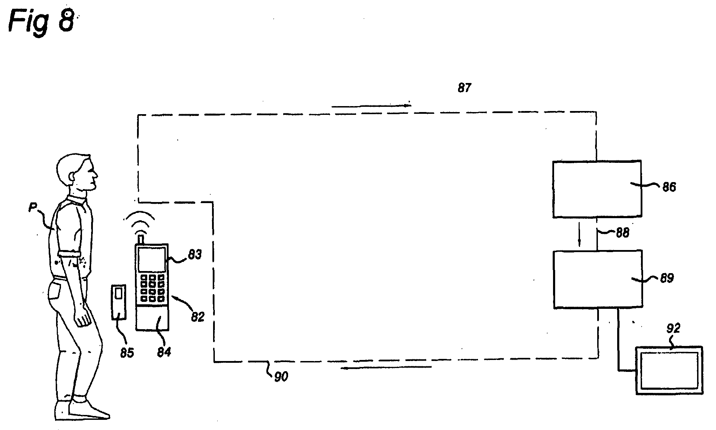

Fig. 8 shows a further embodiment of the invention. In this embodiment, object data is not sent from the server unit on which the object data is stored to the reading unit which read out the identification carrier of the object in question; instead, the object data, or at least some of it, is offered to a further server unit, for example a third party's server unit. Shown is a person P (object) who possesses a mobile telephone apparatus 82. The mobile telephone apparatus 82 is of a type in which the telephone portion 83, with which network connections can be established via, for example, a GSM or UMTS network, is integrated with a reader 84 with which any desired identification carrier, for example a card 85 provided with an RFID transponder, can be read out The example shown uses what is known as the near field communication (NFC) (ISO/IEC and ECMA) standard with which the data on the identification carrier can be read out wirelessly via magnetic field induction. In the example discussed in the present document, the identification carrier is a card 85, containing an RFID transponder, of an emergency service with which the person P can request medical aid. For this purpose, the person P holds the mobile telephone 82, more specifically the read-out device 84, in the region of the transponder on the card 85, after which the read-out device 84 automatically reads out the transponder. At least a first identification code which is unique to the transponder and was stored beforehand on the transponder is read out. Once the reading unit 84 has read out the identification code, the network portion of the mobile telephone 83 establishes contact with the first server unit or root server 86 of the system via the mobile telephone network 87. Once contact has been established, the network portion 83 dispatches the read-out first identification code to the server 86 via the network 87, after which the server compares the received first identification code with a code stored beforehand on the server (or on another server connected to the root server 86). If the first identification code is found to correspond to a second identification code stored on the server, or at least to have a predefined connection thereto, and optionally after having successfully completed an authentication step, the server 86 can release some of the data stored thereon. The object data is in the present example the NAW data of the person P who made the call and also specific medical data which the person P previously specified could be released. The server 86 subsequently dispatches the object data to an external further server 89 of an emergency service via a second network 88. The emergency service subsequently receives this object data. The object data can, for example, be displayed on a screen 92 which is connected to the further server 89. Prompted to do so by the receipt of the object data, an operator O can establish a voice connection to the mobile telephone apparatus 82 of the person P via a fixed or mobile telephone connection 90 or via a VOIP connection. The operator can then speak to the person and at the same time consult the object data which is representative of this person. As a result of the fact that use is made of an embodiment of the invention in which object data which is separate from the card 85 can be released to a third party such as an emergency service, the third party can communicate rapidly and efficiently with the person P by calling the person and by at the same time inspecting the medical data of the person P on the operator's screen. This not only allows better medical advice to be offered, but also greatly increases the speed and accuracy with which such advice can be given.

In another embodiment of the invention, the identification carrier comprises a bank card (including a credit card or any other type of carrier which can be read out and with which a financial transaction can be executed) on which a unique first identification code, for example the UID of the chip of the carrier, is stored. The information stored on the bank card can be read out with the aid of a reading unit in the form of a mobile telephone which is provided with an NFC module. As described hereinbefore, the first identification code, or at least a second identification code which is related to the first identification code, is stored beforehand on the external server. In addition, further codes are stored on the server unit. In one embodiment, a code which is unique to the respective mobile telephone, such as the International Mobile Equipment Identity (IMEI) code and/or an International Mobile Subscriber Identity (IMSI) code which is unique to the user of the telephone (and for example stored on the SIM card of the telephone), is stored. Furthermore, the Personal Identification Number (referred to hereinafter as a PIN code), or at least a code related thereto, is stored on the server unit.

The aforementioned further codes can also form part of the identification data which the mobile telephone dispatches to the server unit via the electronic network (in this case a network for mobile telephony) in the use phase for the purposes of identification. When the bank card is used by a user, for example for the executing of a financial transaction, the mobile telephone reads out in the above-described manner the first identification code (for example the UID) and the location data (for example a URL comprising a unique number which determines the landing page on the external server) from the information carrier. In addition, the mobile telephone determines the IMEI code and/or the IMSI code which are respectively stored on the telephone and the SIM card thereof. Finally, the telephone invites the user to enter his PIN code. Once the user has entered the PIN code, for example by keying it in on the keypad of the telephone, the telephone has a number of additional identification codes at its disposal. In addition, the mobile telephone dispatches the first identification code, optionally (some of) the information from the location data (for example information from which the landing page on the server unit can be determined), and also the additional codes in the form of the PIN code in combination with the IMEI code and/or IMSI code, to the server unit determined by the location data. The server unit then receives at least three, but preferably four or more, different codes.

The server unit is configured for the receiving of the identification data and the determining on the basis of the received identification data of whether object data may be provided. The server unit compares the received identification data, for example, with the previously stored information. Only if the unique combination of the various codes corresponds to the combination stored on the server unit, or at least can be derived therefrom, is the requested object data provided. The user may thus securely obtain access to the financial services offered by the server unit (or another server unit connected thereto).

In a further embodiment, the reading unit, for example the mobile telephone, encrypts the specific UID, URL, IMEI and/or IMSI and the PIN code in a unique manner. The encrypted identification data is then dispatched to the server unit. The server unit contains the same algorithm in order to decrypt and to verify the encrypted identification data with a view to allowing possible access. The server unit is in this case configured for the receiving of the encrypted identification data and the determining on the basis of the received encrypted identification of whether object data may be provided. In specific embodiments, the encrypted identification data is converted into the original identification data; in other embodiments, the accuracy of the received encrypted identification data will be determined differently, for example by comparing the encrypted identification data received by the server unit with identification data stored on the server unit.

Although this is generally not the intended purpose, it is in principle possible to store the encrypted or unencrypted identification data which led to a successful identification by the server unit on the reading unit or on another storage medium. Based on the stored identification data, contact could then again (i.e. at a later point in time) be established with the server unit and the object data could be released without the user having authorized this. If, for example, the telephone is stolen, transactions could then be executed without the thief having to enter the PIN code or even having to have the bank card in his possession. In order to prevent this situation, in a still further embodiment, in addition to the aforementioned static codes such as the UID, (optionally (a part of the) URL), the IMEI and/or IMSI code and the PIN code, dynamic (time-variable) data (codes) such as the time, date, IP address, location, the previous key, codes of a random generator and the like, are used to determine the unique encrypted identification data by means of the reading unit. If the server unit has the same algorithm for decrypting the encrypted identification data, it can allow access to the object data in the manner described hereinbefore. Even if the encrypted or unencrypted identification data is then stored on the reading unit or wherever, this stored identification data does not allow the object data to be re-accessed at a later point in time.

The authenticity of the issuer of the identification carriers is linked to the uniqueness of the domain. The use of this domain in the identification data also ensures the authenticity of the object. This is achieved partly by the discussed embodiment, the allocation of the identification data by the issuer (manufacturer) being linked one by one to the cremation of the object, and only coupled objects leaving the location, or at least the scope of liability, of the issuer.

The present invention is not limited to the preferred embodiments described in the present document. On the contrary, the extent of protection applied for is determined by the subsequent claims, within the scope of which a large number of modifications are conceivable.

## Claims

1. A method for obtaining object data which are representative of an object, wherein the object forms part of a group of objects, the method including the relating in a preliminary phase of each of the objects from the group to an associated electronic identification carrier and the identifying in a use phase based on the identification carrier of a specific object from the group of objects, the method including in the preliminary phase:
a) the allocation of an electronic identification carrier to each of the objects of the group;
b) the generating for each of the identification carriers of identification data, at least comprising location data of one or more network locations of at least one server unit connected to an electronic network and also at least one first identification code which is unique to the respective identification carrier;
c) the storing in each of the identification carriers of the associated identification data;
d) the storing in advance, for each of the objects of the group, on at least one of the aforementioned server units of second identification codes of the identification carriers allocated thereto, which second identification codes are related to the first identification codes;
e) the storing for each stored identification code on the server unit of or reference to object data which is representative of the associated object;
the method further including in the use phase:
f) the reading-out of the identification data using an electronic reading unit from the identification carrier of a specific object to be identified
g) the determining from the identification data of the one or more network locations of the server unit;
h) the dispatching over the network to the server unit of at least the first identification code;
i) the determining by the server unit based on the received first identification code and stored identification codes of which object data pertains to the specific object;
j) the provision of at least some of this object data,
wherein the electronic reading unit is a mobile telephone ;
the identification data also comprises command data for executing commands on one or more of the network locations and in that the method also includes:
- the dispatching over the network to the server unit of at least the command data;
- the executing by the server unit on the basis of the command data of the command(s) pertaining thereto;
the dispatching to the server unit of at least the first identification code includes the likewise dispatching of at least one reading unit identification code which is representative of the reading unit as a component of the identification data and the determining by the server unit from the reader unit identification code of which part of the stored object data may be provided; and
the dispatching to the server unit of at least the identification code includes the likewise dispatching of a user code which is representative of the user of an object as a component of the identification data and the determining by the server unit from the user-specific user code of which part of the stored object data may be provided, wherein the identification data also comprises an IMEI code of the mobile telephone, an IMSI code of a user of the mobile telephone, and/or a PIN code to be entered by a user of the mobile telephone.

2. The method as claimed in claim 1, **characterized in that** the use phase is further **characterized by**:
- the comparing of the determined first identification code with the aforementioned second identification codes which are stored on the server unit in the preliminary phase and the provision of object data pertaining to the specific object over an electronic network only in the case of a corresponding identification code.

3. The method as claimed in claim 1, **characterized in that** a command includes the generating of new object data which is representative of the specific object and/or the adaptation of existing object data thereto.

4. The method as claimed in one of the preceding claims, **characterized in that** the provision includes the dispatching of object data to the reading unit over a network.

5. The method as claimed in claim 4, including the dispatching from the reading unit over the network to the server unit of data for supplementing, replacing and/or adapting the object data which is already stored on the server unit.

6. The method as claimed in one of the preceding claims, including the sending of data, in particular object data, from the server unit to the reading unit and the displaying thereof on a screen of the reading unit.

7. The method as claimed in one of the preceding claims, including the encrypting of the identification data and the sending of the encrypted identification data to the server unit.

8. A system for obtaining object data which is representative of an object, **characterized in that** the object forms part of a group of objects, the system comprising:
- a number of electronic identification carriers, an identification carrier being allocated to each object;
- at least one server unit;
- at least one electronic reading unit, which is connectable to the server unit via at least one electronic network, for the reading-out of data stored on an identification carrier;
- a generator for the generating for each of the identification carriers of identification data, at least comprising location data of one or more network locations of at least one server unit connected to an electronic network and also a first identification code which is unique to the respective identification carrier;
- a programming unit for the storing in each of the identification carriers of the associated generated identification data;
at least one of the server units being configured for:
- the storing in advance, for each of the objects of the group, on at least one of the aforementioned server units of second identification codes of the identification carriers allocated thereto, which second identification codes are related to the first identification codes;
- the storing for each stored identification code on the server unit of or reference to object data which is representative of the associated object;
- the determining by the server unit based on a received first identification code of a specific object and also the stored second identification codes of which object data pertains to the specific object;
- the provision of at least some of this object data;
and at least one of the reading units being configured for:
- the retrieval from an identification carrier of a specific object to be identified of the identification data;
- the determining from the identification data of the one or more network locations of the server unit;
- the dispatching over the network to the server unit of at least the first identification code; wherein
the electronic reading unit is a mobile telephone;
the identification data also comprises command data for executing commands on one or more of the network locations and **in that** the system is further configured for
- the dispatching over the network to the server unit of at least the command data;
- and the server unit is configured to execute, on the basis of the command data, the command(s) pertaining thereto;
the dispatching to the server unit of at least the first identification code includes the likewise dispatching of at least one reading unit identification code which is representative of the reading unit as a component of the identification data and the determining by the server unit from the reader unit identification code of which part of the stored object data may be provided; and
the dispatching to the server unit of at least the identification code includes the likewise dispatching of a user code which is representative of the user of an object as a component of the identification data and the determining by the server unit from the user-specific user code of which part of the stored object data may be provided, wherein the identification data also comprises:
- an IMEI code stored on the mobile telephone and/or an IMSI code stored on the SIM card of the mobile telephone; and
- a PIN code to be entered by a user via the mobile telephone.

9. The system as claimed in claim 8, **characterized in that** the at least one server unit is configured for the comparing of a received first identification code of a specific object with stored second identification codes and the provision of object data pertaining to the specific object over an electronic network only in the case of a corresponding identification code.

10. The system as claimed in claim 8, **characterized in that** the command data refers to a computer program which executes the aforementioned command when the computer program is run on the server unit.

11. The system as claimed in one of claims 8-10, **characterized in that** the identification carrier is a radio frequency identification (RFID) transponder.

12. The system as claimed in one of claims 8-11, **characterized in that** the identification carrier is a magnetic card or chip card.

13. The system as claimed in one of claims 8-12, **characterized in that** the reading unit is configured for contactlessly reading from and/or writing to the identification carrier.

14. The system as claimed in claim 1, **characterized in that** the mobile telephone is configured for the encrypting of the identification data and the sending of the encrypted identification data to the server unit.

15. The system as claimed in claim 14, **characterized in that** the server unit is configured for the receiving of the encrypted identification data and the determining on the basis of the received encrypted identification of whether object data may be provided.

## Patentansprüche

1. Verfahren zum Erhalten von Objektdaten, die für ein Objekt bezeichnend sind, wobei das Objekt einen Teil einer Gruppe von Objekten bildet, wobei das Verfahren das Beziehen in einer vorläufigen Phase von jedem der Objekte aus der Gruppe auf einen zugehörigen elektronischen Identifikationsträger und das Identifizieren eines bestimmten Objektes aus der Gruppe von Objekten in einer Nutzungsphase auf der Grundlage des Identifikationsträgers aufweist, wobei das Verfahren in der vorläufigen Phase Folgendes aufweist:
a) die Zuordnung eines elektronischen Identifikationsträgers zu jedem der Objekte der Gruppe;
b) das Erzeugen für jeden der Identifikationsträger von Identifikationsdaten, zumindest mit Standortdaten von einem oder mehreren Netzwerkstandorten von mindestens einer mit einem elektronischen Netzwerk verbundenen Servereinheit und auch mindestens einem ersten Identifikationscode, der für den jeweiligen Identifikationsträger einmalig ist;
c) das Speichern in jedem der Identifikationsträger der zugehörigen Identifikationsdaten;
d) das Speichern im Voraus für jedes der Objekte der Gruppe auf mindestens einer der vorgenannten Servereinheiten von zweiten Identifikationscodes der diesen zugeordneten Identifikationsträgern, wobei die zweiten Identifikationscodes auf die ersten Identifikationscodes bezogen sind;
e) das Speichern für jeden gespeicherten Identifikationscode auf der Servereinheit von oder eines Bezugs auf Objektdaten, die für das zugehörige Objekt bezeichnend sind;
wobei das Verfahren ferner Folgendes in der Nutzungsphase aufweist:
f) das Auslesen der Identifikationsdaten unter Verwendung einer elektronischen Leseeinheit aus dem Identifikationsträger eines bestimmten, zu identifizierenden Objektes;
g) das Bestimmen des einen oder der mehreren Netzwerkstandorte der Servereinheit aus den Identifikationsdaten;
h) das Verschicken von zumindest dem ersten Identifikationscode über das Netzwerk an die Servereinheit;
i) das Bestimmen durch die Servereinheit auf der Grundlage des erhaltenen ersten Identifikationscodes und gespeicherter Identifikationscodes, welche Objektdaten zu dem bestimmten Objekt gehören;
j) die Bereitstellung von mindestens einigen dieser Objektdaten, wobei die elektronische Leseeinheit ein Mobiltelefon ist;
wobei die Identifikationsdaten auch Befehlsdaten zum Ausführen von Befehlen an einem oder mehreren der Netzwerkstandorte umfassen, und das Verfahren außerdem Folgendes aufweist:
- das Verschicken von zumindest den Befehlsdaten über das Netzwerk an die Servereinheit;
- das Ausführen durch die Servereinheit auf der Grundlage der Befehlsdaten des/der dazu gehörenden Befehls/e,
wobei das Verschicken an die Servereinheit von mindestens einem ersten Identifikationscode ebenfalls das Verschicken von mindestens einem Leseeinheit-Identifikationscode, der für die Leseeinheit als ein Bestandteil der Identifikationsdaten bezeichnend ist, und das Bestimmen durch die Servereinheit aus dem Lesereinheit-Identifikationscode, welcher Teil der gespeicherten Objektdaten bereitgestellt werden kann, aufweist; und
wobei das Verschicken an die Servereinheit von zumindest dem Identifikationscode ebenfalls das Verschicken eines Benutzercodes, der für den Benutzer eines Objektes als Bestandteil der Identifikationsdaten bezeichnend ist, und das Bestimmen durch die Servereinheit aus dem benutzerspezifischen Benutzercode, welcher Teil der gespeicherten Objektdaten bereitgestellt werden kann, aufweist,
wobei die Identifikationsdaten auch einen IMEI-Code des Mobiltelefons, einen IMSI-Code eines Benutzers des Mobiltelefons und/oder einen von einem Benutzer des Mobiltelefons einzugebenden PIN-Code umfassen.

2. Verfahren gemäß Anspruch 1, **dadurch gekennzeichnet, dass** die Nutzungsphase weiterhin **gekennzeichnet ist durch**:
- das Vergleichen des bestimmten ersten Identifikationscodes mit den vorgenannten zweiten Identifikationscodes, die auf der Servereinheit in der vorläufigen Phase gespeichert sind, und die Bereitstellung von zu dem bestimmten Objekt gehörenden Objektdaten über ein elektronisches Netzwerk nur im Fall eines entsprechenden Identifikationscodes.

3. Verfahren gemäß Anspruch 1, **dadurch gekennzeichnet, dass** ein Befehl das Erzeugen von neuen Objektdaten enthält, die für das bestimmte Objekt bezeichnend sind und/oder die Anpassung von bestehenden Objektdaten an dieses.

4. Verfahren gemäß einem der vorhergehenden Ansprüche, **dadurch gekennzeichnet, dass** die Bereitstellung das Verschicken von Objektdaten an die Leseeinheit über ein Netzwerk umfasst.

5. Verfahren gemäß Anspruch 4, welches das Verschicken von der Leseeinheit über das Netzwerk zu der Servereinheit von Daten zum Ergänzen, Ersetzen und/oder Anpassen der Objektdaten, die bereits auf der Servereinheit gespeichert sind, umfasst.

6. Verfahren gemäß einem der vorhergehenden Ansprüche, welches das Senden von Daten, insbesondere Objektdaten, von der Servereinheit an die Leseeinheit und das Anzeigen derselben auf einem Bildschirm der Leseeinheit umfasst.

7. Verfahren gemäß einem der vorhergehenden Ansprüche, welches das Verschlüsseln der Identifikationsdaten und das Senden der verschlüsselten Identifikationsdaten an die Servereinheit umfasst.

8. System zum Erhalten von Objektdaten, die für ein Objekt bezeichnend sind, **dadurch gekennzeichnet, dass** das Objekt einen Teil einer Gruppe von Objekten bildet, wobei das System Folgendes umfasst:
- eine Anzahl von elektronischen Identifikationsträgern, wobei jedem Objekt ein Identifikationsträger zugeordnet ist;
- mindestens eine Servereinheit;
- mindestens eine elektronische Leseeinheit, die mit der Servereinheit über mindestens ein elektronisches Netzwerk verbindbar ist, zum Auslesen von auf einem Identifikationsträger gespeicherten Daten;
- einen Erzeuger zum Erzeugen von Identifikationsdaten für jeden der Identifikationsträger, zumindest mit Standortdaten von einem oder mehreren Netzwerkstandorten von mindestens einer mit einem elektronischen Netzwerk verbundenen Servereinheit und außerdem einem ersten Identifikationscode, der für den jeweiligen Identifikationsträger einmalig ist;
- eine Programmiereinheit zum Speichern der zugeordneten erzeugten Identifikationsdaten in jedem der Identifikationsträger;
wobei mindestens eine der Servereinheiten ausgeführt ist für:
- das Speichern im Voraus für jedes der Objekte der Gruppe auf mindestens einer der vorgenannten Servereinheiten von zweiten Identifikationscodes der diesen zugeordneten Identifikationsträger, wobei die zweiten Identifikationscodes auf die ersten Identifikationscodes bezogen sind;
- das Speichern für jeden gespeicherten Identifikationscode auf der Servereinheit von oder eines Bezugs auf Objektdaten, die für das zugehörige Objekt bezeichnend sind;
- das Bestimmen durch die Servereinheit auf der Grundlage eines erhaltenen ersten Identifikationscodes eines bestimmten Objektes und auch der gespeicherten zweiten Identifikationscodes, welche Objektdaten zu dem bestimmten Objekt gehören;
- das Vorsehen von mindestens einigen dieser Objektdaten;
und wobei mindestens eine der Leseeinheiten ausgeführt ist für:
- die Gewinnung der Identifikationsdaten von einem Identifikationsträger eines zu identifizierenden bestimmten Objektes;
- das Bestimmen des einen oder der mehreren Netzwerkstandorte der Servereinheit aus den Identifikationsdaten;
- das Verschicken von zumindest dem ersten Identifikationscode über das Netzwerk an die Servereinheit; wobei
die elektronische Leseeinheit ein Mobiltelefon ist;
die Identifikationsdaten auch Befehlsdaten für die Ausführung von Befehlen an einem oder mehreren der Netzwerkstandorte umfassen, und dass das System weiterhin ausgeführt ist für
- das Verschicken von zumindest den Befehlsdaten über das Netzwerk an die Servereinheit;
- und die Servereinheit auf der Basis der Befehlsdaten zur Ausführung des/der zu diesen gehörenden Befehl(e) vorgesehen ist;
wobei das Verschicken von zumindest dem ersten Identifikationscode an die Servereinheit ebenfalls das Verschicken von zumindest einem Leseeinheit-Identifikationscode umfasst, der für die Leseeinheit als ein Bestandteil der Identifikationsdaten bezeichnend ist, und das Bestimmen durch die Servereinheit aus dem Lesereinheit-Identifikationscode, welcher Teil der gespeicherten Objektdaten bereitgestellt werden kann; und
das Verschicken von zumindest dem Identifikationscode an die Servereinheit ebenfalls das Verschicken eines Benutzercodes aufweist, der für den Benutzer eines Objektes als ein Bestandteil der Identifikationsdaten bezeichnend ist, und das Bestimmen durch die Servereinheit aus dem benutzerspezifischen Benutzercode, welcher Teil der gespeicherten Objektdaten bereitgestellt werden kann,
wobei die Identifikationsdaten außerdem Folgendes umfassen:
- einen auf dem Mobiltelefon gespeicherten IMEI-Code und/oder einen auf der SIM-Karte des Mobiltelefons gespeicherten IMSI-Code; sowie
- einen von einem Benutzer über das Mobiltelefon einzugebenden PIN-Code.

9. System gemäß Anspruch 8, **dadurch gekennzeichnet, dass** die mindestens eine Servereinheit für das Vergleichen eines erhaltenen ersten Identifikationscodes eines bestimmten Objektes mit gespeicherten zweiten Identifikationscodes und die Bereitstellung von zu dem bestimmten Objekt gehörenden Objektdaten über ein elektronisches Netzwerk nur im Falle eines entsprechenden Identifikationscodes ausgeführt ist.

10. System gemäß Anspruch 8, **dadurch gekennzeichnet, dass** sich die Befehlsdaten auf ein Computerprogramm beziehen, das den vorgenannten Befehl ausführt, wenn das Computerprogramm auf der Servereinheit läuft.

11. System gemäß einem der Ansprüche 8 bis 10, **dadurch gekennzeichnet, dass** der Identifikationsträger ein Funkfrequenzidentifikations- (RFID) Transponder ist.

12. System gemäß einem der Ansprüche 8 bis 11, **dadurch gekennzeichnet, dass** der Identifikationsträger eine Magnetkarte oder Chipkarte ist.

13. System gemäß einem der Ansprüche 8 bis 12, **dadurch gekennzeichnet, dass** die Leseeinheit zum kontaktlosen Auslesen aus dem und/oder Schreiben in den Identifikationsträger ausgeführt ist.

14. System gemäß Anspruch 1, **dadurch gekennzeichnet, dass** das Mobiltelefon zum Verschlüsseln der Identifikationsdaten und zum Senden der verschlüsselten Identifikationsdaten an die Servereinheit ausgeführt ist.

15. System gemäß Anspruch 14, **dadurch gekennzeichnet, dass** die Servereinheit zum Empfangen der verschlüsselten Identifikationsdaten und Bestimmen auf der Grundlage der empfangenen verschlüsselten Identifikation, ob Objektdaten bereitgestellt werden können, ausgeführt ist.

## Revendications

1. Procédé d'obtention de données d'objet qui sont représentatives d'un objet, dans lequel l'objet fait partie d'un groupe d'objets, le procédé comprenant la mise en relation, au cours d'une phase préliminaire, de chacun des objets du groupe avec un support d'identification électronique associé, et l'identification, au cours d'une phase d'utilisation, sur la base du support d'identification, d'un objet spécifique du groupe d'objets, le procédé comprenant les étapes ci-dessous, au cours de la phase préliminaire :
a) l'affectation d'un support d'identification électronique à chacun des objets du groupe ;
b) la génération, pour chacun des supports d'identification, de données d'identification, comprenant au moins des données de localisation d'un ou plusieurs emplacements de réseaux d'au moins une unité de serveur connectée à un réseau électronique, et également au moins un premier code d'identification qui est unique pour le support d'identification respectif ;
c) le stockage, dans chacun des supports d'identification, des données d'identification associées ;
d) le stockage, au préalable, pour chacun des objets du groupe, sur au moins l'une des unités de serveurs susmentionnées, de seconds codes d'identification des supports d'identification affectés à ceux-ci, lesquels seconds codes d'identification sont connexes aux premiers codes d'identification ;
e) le stockage, pour chaque code d'identification stocké sur l'unité de serveur, de données d'objet, ou d'une référence à des données d'objet, lesquelles sont représentatives de l'objet associé ;
le procédé comprenant en outre les étapes ci-dessous, au cours de la phase d'utilisation :
f) la lecture des données d'identification, en utilisant une unité de lecture électronique, du support d'identification d'un objet spécifique à identifier ;
g) la détermination, à partir des données d'identification, dudit un ou desdits plusieurs emplacements de réseaux de l'unité de serveur ;
h) l'envoi, sur le réseau, à l'unité de serveur, d'au moins le premier code d'identification ;
i) la détermination, par l'unité de serveur, sur la base du premier code d'identification reçu et de codes d'identification stockés, des données d'objet qui se rapportent à l'objet spécifique ;
j) la fourniture d'au moins certaines de ces données d'objet ;
dans lequel l'unité de lecture électronique est un téléphone mobile ;
les données d'identification comportent en outre des données de commande destinées à exécuter des commandes sur un ou plusieurs des emplacements de réseaux, et **caractérisé en ce que** le procédé inclut également les étapes ci-dessous :
- l'envoi, sur le réseau, à l'unité de serveur, d'au moins les données de commande ;
- l'exécution, par l'unité de serveur, sur la base des données de commande, de la ou des commandes connexes ;
l'envoi, à l'unité de serveur, d'au moins le premier code d'identification, inclut l'envoi correspondant d'au moins un code d'identification d'unité de lecture qui est représentatif de l'unité de lecture, sous la forme d'une composante des données d'identification, et la détermination, par l'unité de serveur, à partir du code d'identification d'unité de lecture, de la partie des données d'objet stockées qui peut être fournie ; et
l'envoi, à l'unité de serveur, d'au moins le code d'identification, inclut l'envoi correspondant d'un code d'utilisateur qui est représentatif de l'utilisateur d'un objet, sous la forme d'une composante des données d'identification, et la détermination, par l'unité de serveur, à partir du code d'utilisateur spécifique à l'utilisateur, de la partie des données d'objet stockées qui peut être fournie, dans lequel les données d'identification comportent également un code IMEI du téléphone mobile, un code IMSI d'un utilisateur du téléphone mobile, et/ou un code PIN devant être saisi par un utilisateur du téléphone mobile.

2. Procédé selon la revendication 1, **caractérisé en ce que** la phase d'utilisation est en outre **caractérisée par** les étapes ci-dessous :
- la comparaison du premier code d'identification déterminé aux seconds codes d'identification susmentionnés qui sont stockés sur l'unité de serveur, au cours de la phase préliminaire, et la fourniture de données d'objet se rapportant à l'objet spécifique sur un réseau électronique, uniquement dans le cas d'un code d'identification correspondant.

3. Procédé selon la revendication 1, **caractérisé en ce qu'**une commande inclut la génération de nouvelles données d'objet qui sont représentatives de l'objet spécifique et/ou l'adaptation de données d'objet existantes à celui-ci.

4. Procédé selon l'une quelconque des revendications précédentes, **caractérisé en ce que** la fourniture inclut l'envoi de données d'objet à l'unité de lecture sur un réseau.

5. Procédé selon la revendication 4, incluant l'envoi, de l'unité de lecture sur le réseau, à l'unité de serveur, de données destinées à compléter, remplacer et/ou adapter les données d'objet qui sont déjà stockées sur l'unité de serveur.

6. Procédé selon l'une quelconque des revendications précédentes, incluant l'envoi de données, en particulier de données d'objet, de l'unité de serveur à l'unité de lecture, et l'affichage de celles-ci sur un écran de l'unité de lecture.

7. Procédé selon l'une quelconque des revendications précédentes, incluant le chiffrement des données d'identification et l'envoi des données d'identification chiffrées à l'unité de serveur.

8. Système destiné à obtenir des données d'objet qui sont représentatives d'un objet, **caractérisé en ce que** l'objet fait partie d'un groupe d'objets, le système comprenant :
- un nombre de supports d'identification électronique, un support d'identification étant affecté à chaque objet ;
- au moins une unité de serveur ;
- au moins une unité de lecture électronique, qui peut être connectée à l'unité de serveur par l'intermédiaire d'au moins un réseau électronique, en vue de la lecture de données stockées sur un support d'identification ;
- un générateur pour la génération, pour chacun des supports d'identification, de données d'identification, comprenant au moins des données de localisation d'un ou plusieurs emplacements de réseaux d'au moins une unité de serveur connectée à un réseau électronique, et également un premier code d'identification qui est unique pour le support d'identification respectif ;
- une unité de programmation pour le stockage, dans chacun des supports d'identification, des données d'identification générées associées ;
au moins l'une des unités de serveurs étant configurée pour :
- le stockage, au préalable, pour chacun des objets du groupe, sur au moins l'une des unités de serveurs susmentionnées, de seconds codes d'identification des supports d'identification affectés à ceux-ci, lesquels seconds codes d'identification sont connexes aux premiers codes d'identification ;
- le stockage, pour chaque code d'identification stocké sur l'unité de serveur, de données d'objet, ou d'une référence à des données d'objet, lesquelles sont représentatives de l'objet associé ;
- la détermination, par l'unité de serveur, sur la base du premier code d'identification reçu d'un objet spécifique et également des seconds codes d'identification stockés, des données d'objet qui se rapportent à l'objet spécifique ;
- la fourniture d'au moins certaines de ces données d'objet ; et
au moins l'une des unités de lecture étant configurée pour :
- la récupération, à partir d'un support d'identification, d'un objet spécifique à identifier des données d'identification ;
- la détermination, à partir des données d'identification, dudit un ou desdits plusieurs emplacements de réseaux de l'unité de serveur ;
- l'envoi, sur le réseau, à l'unité de serveur, d'au moins le premier code d'identification ; dans lequel
l'unité de lecture électronique est un téléphone mobile ;
les données d'identification comportent en outre des données de commande pour exécuter des commandes sur un ou plusieurs des emplacements de réseaux, et **en ce que** le système est en outre configuré pour :
- l'envoi, sur le réseau, à l'unité de serveur, d'au moins les données de commande ; et
- l'unité de serveur est configurée de manière à exécuter, sur la base des données de commande, la ou les commandes connexes ;
l'envoi, à l'unité de serveur, d'au moins le premier code d'identification, inclut l'envoi correspondant d'au moins un code d'identification d'unité de lecture qui est représentatif de l'unité de lecture, sous la forme d'une composante des données d'identification, et la détermination, par l'unité de serveur, à partir du code d'identification d'unité de lecture, de la partie des données d'objet stockées qui peut être fournie ; et
l'envoi, à l'unité de serveur, d'au moins le code d'identification, inclut l'envoi correspondant d'un code d'utilisateur qui est représentatif de l'utilisateur d'un objet, sous la forme d'une composante des données d'identification, et la détermination, par l'unité de serveur, à partir du code d'utilisateur spécifique à l'utilisateur, de la partie des données d'objet stockées qui peut être fournie, dans lequel les données d'identification comportent également :
- un code IMEI stocké sur le téléphone mobile et/ou un code IMSI stocké sur la carte SIM du téléphone mobile ; et
- un code PIN devant être saisi par un utilisateur, par l'intermédiaire du téléphone mobile.

9. Système selon la revendication 8, **caractérisé en ce que** ladite au moins une unité de serveur est configurée pour la comparaison d'un premier code d'identification reçu d'un objet spécifique à des seconds codes d'identification stockés, et la fourniture de données d'objet se rapportant à l'objet spécifique sur un réseau électronique, uniquement dans le cas d'un code d'identification correspondant.

10. Système selon la revendication 8, **caractérisé en ce que** les données de commande font référence à un programme informatique qui exécute la commande susmentionnée lorsque le programme informatique est exécuté sur l'unité de serveur.

11. Système selon l'une quelconque des revendications 8 à 10, **caractérisé en ce que** le support d'identification est un transpondeur d'identification par radiofréquence (RFID).

12. Système selon l'une quelconque des revendications 8 à 11, **caractérisé en ce que** le support d'identification est une carte magnétique ou une carte à puce.

13. Système selon l'une quelconque des revendications 8 à 12, **caractérisé en ce que** l'unité de lecture est configurée pour une lecture sans contact à partir du support d'identification et/ou pour une écriture sur le support d'identification.

14. Système selon la revendication 1, **caractérisé en ce que** le téléphone mobile est configuré pour le chiffrement des données d'identification et l'envoi des données d'identification chiffrées à l'unité de serveur.

15. Système selon la revendication 14, **caractérisé en ce que** l'unité de serveur est configurée pour la réception des données d'identification chiffrées et la détermination, sur la base de l'identification chiffrée reçue, du fait que des données d'objet peuvent être fournies.
